Europäisches Patentamt

European Patent Office

Office européen des brevets

(11) Veröffentlichungsnummer: **0 299 269**
**A1**

## (12) EUROPÄISCHE PATENTANMELDUNG

(21) Anmeldenummer: 88110227.1

(22) Anmeldetag: 27.06.88

(51) Int. Cl.4: **F16L 3/20** , **F16L 55/02** , **F16F 1/38**

(30) Priorität: 10.07.87 DE 3722920

(43) Veröffentlichungstag der Anmeldung:
18.01.89 Patentblatt 89/03

(84) Benannte Vertragsstaaten:
AT BE CH DE ES FR GB IT LI NL SE

(71) Anmelder: Siemens Aktiengesellschaft Berlin
und München
Wittelsbacherplatz 2
D-8000 München 2(DE)

(72) Erfinder: Labes, Manfred, Dipl.-Ing.
Ellenseestrasse 21
D-6453 Seligenstadt(DE)
Erfinder: Lauer, Joachim, Dr.
Marienstrasse 11
D-6054 Rodgau 5(DE)

(54) Rohrhalterung.

(57) Die Erfindung betrifft eine Halterung zum Abstützen eines Rohres auf einem Gebäudeteil und zum Dämpfen von Schwingungen des Rohres. Es ist vorgesehen, daß die Halterung zwei Gelenkköpfe (2 und 3) aufweist, die durch einen Schaft (1) miteinander verbunden sind. Der erste Gelenkkopf (2) ist mit dem Rohr und der zweite Gelenkkopf (3) ist mit dem Gebäudeteil verbunden. Mindestens einer der Gelenkköpfe (2 und 3), insbesondere der zweite Gelenkkopf (3) weist ein Lager auf, das ein elastisches Material, insbesondere Gummi enthält. Der zweite Gelenkkopf (3) weist eine Buchse (6) auf, die geeignet ist, einen Haltestift zu umgreifen. Die Buchse (6) sphärisch umschließend ist eine Schicht (5) aus Gummi angeordnet. Ein äußerer Mantel (7) umschließt die Schicht (5) aus Gummi, ohne daß er die Buchse (6) berührt. Mit dem äußeren Mantel (7) ist der Schaft (1) verbunden.

FIG 1

# Rohrhalterung

Die Erfindung betrifft eine Halterung zum Abstützen eines Rohres auf einem Gebäudeteil und zum Dämpfen von Schwingungen des Rohres.

Eine derartige Halterung ist aus der US-Patentschrift 35 39 137 bekannt. Dabei wird das Rohr von einer Lasche umfaßt, die über ein starres Verbindungsteil mit einer Gebäudedecke verbunden ist. Zur Dämpfung von Rohrschwingungen weist die Lasche eine Auskleidung auf, die aus Fiberglas besteht. Aufgrund dieser Lagerung des Rohres werden geringe Schwingungen der Rohrleitung in der Lasche gedämpft. Die Lasche selbst ist mit dem sie tragenden Gebäude starr verbunden.

Eine derartige bekannte Halterung ist geeignet, ständig vorhandene Bewegungen einer großen Rohrleitung, die beispielsweise auf unterschiedliche Erwärmung zurückzuführen sind, zu dämpfen. Zeitweise auftretende Schwingungen mit vergleichsweise größerer Amplitude, die im Resonanzfall auftreten, sind mit der bekannten Halterung nicht zu beherrschen. Außerdem ist die bekannte Halterung nicht zur Dämpfung von zeitweise auftretenden Schwingungen hoher Frequenz ausgelegt. Solche Schwingungen, die betriebsbedingt sind, erreichen 10 Hz. Während der Montage einer Rohrleitung, aber auch während des Betriebes werden Rohrleitungsteile zeitweilig in ihrer Halterung gekippt. Dadurch treten Spannungen auf, für die die bekannte Halterung eine Ausgleichsmöglichkeit nicht vorsieht.

Zum erschütterungsfreien Abstützen von Geräten und Anlagenteilen ist es allgemein üblich, Stoßdämpfer einzusetzen, deren Dämpfungskörper aus Metall oder aus einem elastischen Material wie Gummi bestehen. Derartige Stoßdämpfer sind aber zum Abstützen von Rohrleitungen ungeeignet, da ihre beweglichen Teile abhängig von Frequenz und Amplitude der zu dämpfenden Schwingung sehr schnell verschleißen. Wegen der hohen Frequenzen von Rohrleitungsschwingungen wären beim Einsatz von Stoßdämpfern sehr kleine Inspektionsintervalle notwendig. Darüber hinaus müßten die Stoßdämpfer sehr oft repariert oder sogar ersetzt werden.

Der Erfindung lag die Aufgabe zugrunde, eine Halterung zum Abstützen eines Rohres auf einem Gebäudeteil zu entwickeln, die wegen der benötigten großen Stückzahl kostengünstig herzustellen ist, wenig Wartung benötigt und trotzdem alle auftretenden Schwingungen einer Rohrleitung, insbesondere die hochfrequenten Schwingungen, derart dämpft, daß eine Beschädigung der Rohrleitungen ausgeschlossen ist.

Die Aufgabe wird erfindungsgemäß dadurch gelöst, daß die Halterung zwei Gelenkköpfe aufweist, die durch einen Schaft miteinander verbunden sind, von denen der erste Gelenkkopf mit dem Rohr und der zweite Gelenkkopf mit dem Gebäudeteil in Verbindung zu bringen ist, und daß mindestens einer der Gelenkköpfe ein Lager aufweist, das ein elastisches Material enthält.

Mit der erfindungsgemäßen Halterung wird der Vorteil erzielt, daß aufgrund der Hysterese des elastischen Materials betriebsbedingte Schwingungen des Rohres, auch falls deren Frequenz hoch ist, absorbiert werden, ohne daß Kräfte auf die starren Teile der Halterung und auf das Rohr selbst übertragen werden, die eine Beschädigung zur Folge haben könnten. Druckstöße auf die Rohrleitung werden durch die erfindungsgemäße Halterung soweit gedämpft, daß Beschädigungen ausgeschlossen sind. Andererseits ist die erfindungsgemäße Halterung im Vergleich zu bekannten Stoßdämpfern, die teilweise aus elastischem Material bestehen, weniger störanfällig und ist anders als bekannte Stoßdämpfer auch zur Dämpfung von hochfrequenten Schwingungen, deren Frequenz ungefähr 10 Hz beträgt, einsetzbar.

Die Kraftübertragung durch die Halterung erfolgt stets in Längsrichtung. Mögliche Torsionsbewegungen des Rohres werden durch eine Schubverformung des elastischen Materials in einem der Gelenkköpfe verschleißfrei abgebaut.

Die erfindungsgemäße Halterung ist auch bei hohen Stückzahlen kostengünstig herstellbar. Die mechanische Belastung der Halterung ist gering, so daß der Verschleiß der Halterung und damit der zeitliche und materielle Aufwand für die Wartung klein ist. Die erfindungsgemäße Halterung ist besser als bekannte Vorrichtungen zum Abstützen eines Rohres auf einem Gebäudeteil geeignet.

Die Gelenkköpfe sind in der Regel so ausgebildet, daß sie eine Buchse aufweisen, die einen fest montierten Haltestift umgreift. Im Gelenkkopf ist die Buchse und den Haltestift sphärisch umschließend eine Schicht aus einem elastischen Material angeordnet. Der Schaft der Halterung steht ausschließlich mit dieser Schicht aus elastischem Material in Verbindung.

Dadurch ist gewährleistet, daß eine Kraftübertragung vom Schaft der Halterung auf den Haltestift stets über die Schicht aus elastischem Material erfolgt, die eine Dämpfung bewirkt.

Durch die sphärische Anordnung der Schicht ist gewährleistet, daß selbst bei einer Beschädigung der Schicht aus elastischem Material die Rohrhalterung nicht versagt. Das Rohr wird selbst dann noch ausreichend sicher gehalten.

Beispielsweise weist der zweite Gelenkkopf, der mit dem Gebäudeteil in Verbindung gebracht werden soll, ein Lager auf, das elastisches Material enthält. Ein geeignetes elastisches Material ist beispielsweise Gummi.

Der Schaft der erfindungsgemäßen Rohrhalterung ist beispielsweise in Längsrichtung verstellbar ausgebildet. Dadurch kann die Rohrhalterung unterschiedlichen Abständen zwischen Rohr und Gebäudeteil angepaßt werden.

Durch die Anordnung des elastischen Materiales im dem Gebäudeteil zugeordneten Gelenkkopf kombiniert mit einer starren Anbindung der Halterung an das Rohr erzielt man eine Vergrößerung der trägen Masse der Rohrleitung. Folglich wirken sich von außen induzierte Schwingungen weniger stark aus als bei einer elastischen Anbindung der Halterung am Rohr. Durch die Verwendung von Gummi anstelle anderer elastischer Materialien erzielt man wegen der guten Hysterese des Gummis selbst bei relativ großen Bewegungen des Rohres nur eine relativ kleine Kraft auf die starren Teile der Halterung.

Mit der Erfindung wird insbesondere der Vorteil erzielt, daß mit kostengünstigen und stabilen Halterungen während der Montage sowie während des Betriebes auf Rohrleitungen einwirkende Kräfte soweit kompensiert werden, daß eine Beschädigung der Rohrleitungen, aber auch der Halterungen ausgeschlossen ist.

Die Erfindung wird anhand der Zeichnung näher erläutert:

FIG 1 zeigt die erfindungsgemäße Halterung.

FIG 2 zeigt die Hysterese einer erfindungsgemäßen Halterung nach einem Impuls auf das Rohr.

FIG 3 zeigt die Kennlinie einer starren Halterung nach einem identischen Impuls auf das Rohr.

FIG 4 zeigt die Hysterese einer erfindungsgemäßen Halterung nach einer erdbebenähnlichen Einwirkung.

FIG 5 zeigt die Kennlinie einer starren Halterung nach einer identischen erdbebenähnlichen Einwirkung.

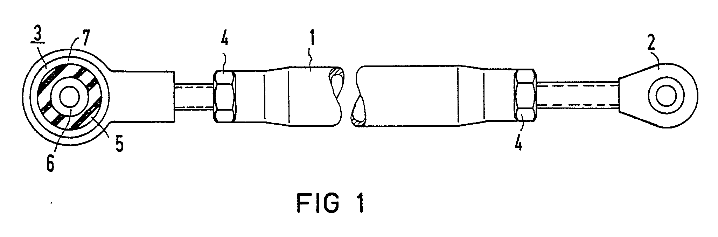

Die erfindungsgemäße Halterung nach FIG 1 zum Abstützen eines Rohres weist einen Schaft 1 auf. Dem Rohr zugewandt, ist mit dem Schaft 1 über ein Linksgewinde ein erster Gelenkkopf 2 aus Stahl verbunden. Dem Gebäudeteil, an dem das Rohr abgestützt werden soll, zugewandt, ist der Schaft 1 über ein Rechtsgewinde mit einem zweiten Gelenkkopf 3 verbunden. Die Länge der gesamten Halterung ist durch die beiden Gewinde zusammen mit Kontermuttern 4 einstellbar. Die Gelenkköpfe 2 und 3 weisen Ausformungen auf, die geeignet sind, Rohre oder Haltestifte zu umgreifen. Der zweite Gelenkkopf 3 weist eine Schicht 5 aus Gummi auf, die eine Buchse 6 für einen Haltestift sphärisch umgreift. Ein äußerer Mantel 7 des zweiten Gelenkkopfes 3 steht ausschließlich mit der Schicht 5 aus Gummi und nicht mit der Buchse 6 für den Haltestift in Verbindung. Am äußeren Mantel 7 ist der Schaft 1 angeformt. Durch die Schicht 5 aus Gummi ist eine zuverlässige Schwingungsdämpfung gewährleistet.

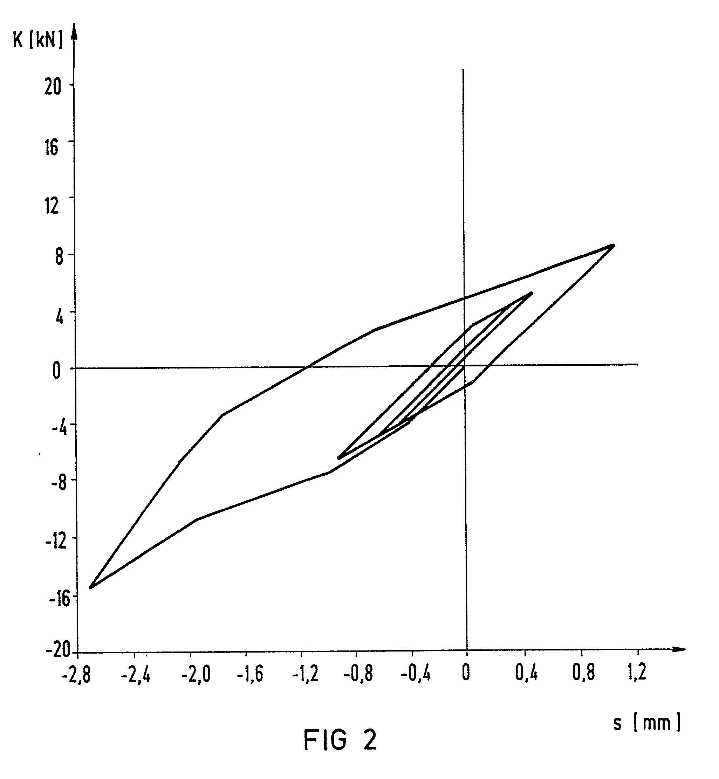

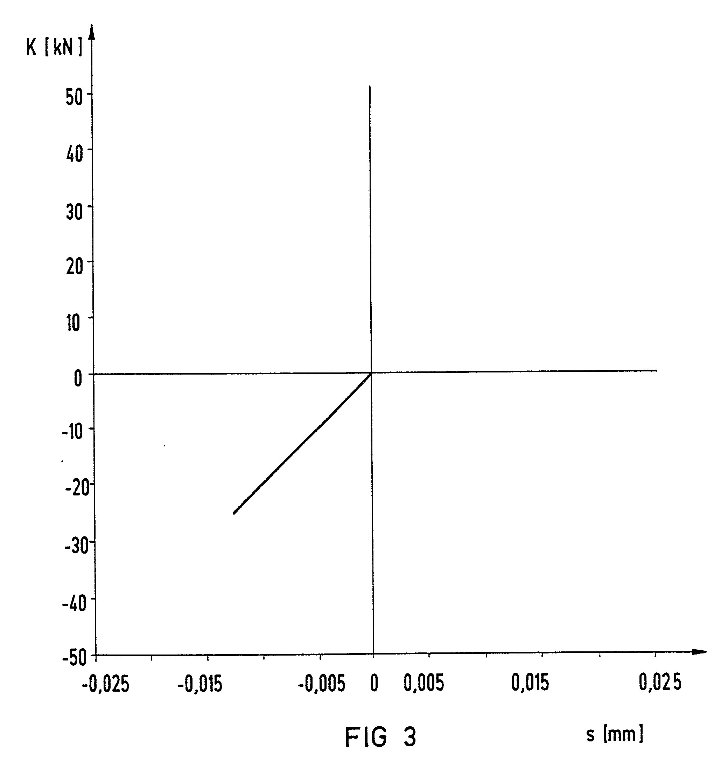

Bei einer impulsartigen Einwirkung auf eine Rohrleitung, die durch Halterungen nach FIG 1 gestützt ist, ergibt sich für eine Halterung ein Bewegungsablauf, wie er aus FIG 2 zu entnehmen ist. Durch die Verwendung von elastischem Material, nämlich Gummi, ergibt sich eine Hysterese. Bei der nach FIG 2 angenommenen Belastung ergibt sich eine maximale Verschiebung der Rohrleitung um 2,7 mm und eine maximale Kraft auf die Halterung, die 16 kN beträgt. Falls statt der erfindungsgemäßen Halterung eine bekannte starre Halterung eingesetzt würde, wäre bei einer Verschiebung der Rohrleitung um nur ungefähr 0,012 mm nach FIG 3 eine maximale Kraft von ungefähr 24,5 kN zu erwarten. Durch die weit geringere Krafteinwirkung bei Verwendung der erfindungsgemäßen Halterungen ist deren Verschleiß soweit reduziert, daß auf Prüfungen der Halterungen weitgehend und auf Reparaturen sowie Austausch der Halterungen ganz verzichtet werden kann. Trotz der relativ geringen Kraft ist der Verschiebungsweg der Rohrleitung, die durch die erfindungsgemäße Halterung gestützt wird, sehr klein. Durch die Verschiebung um nur wenige Millimeter kann die Stabilität der Rohrleitung nicht beeinträchtigt werden.

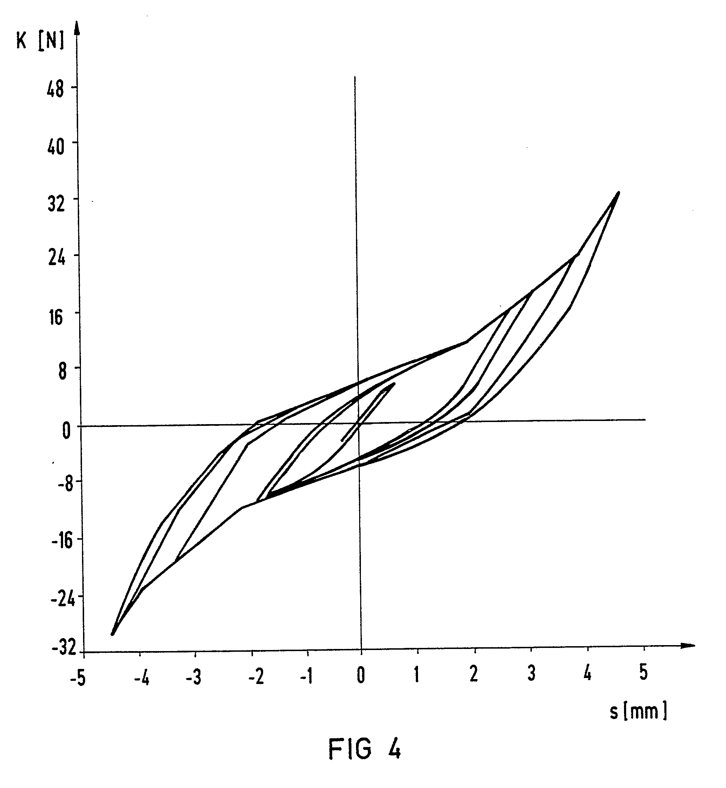

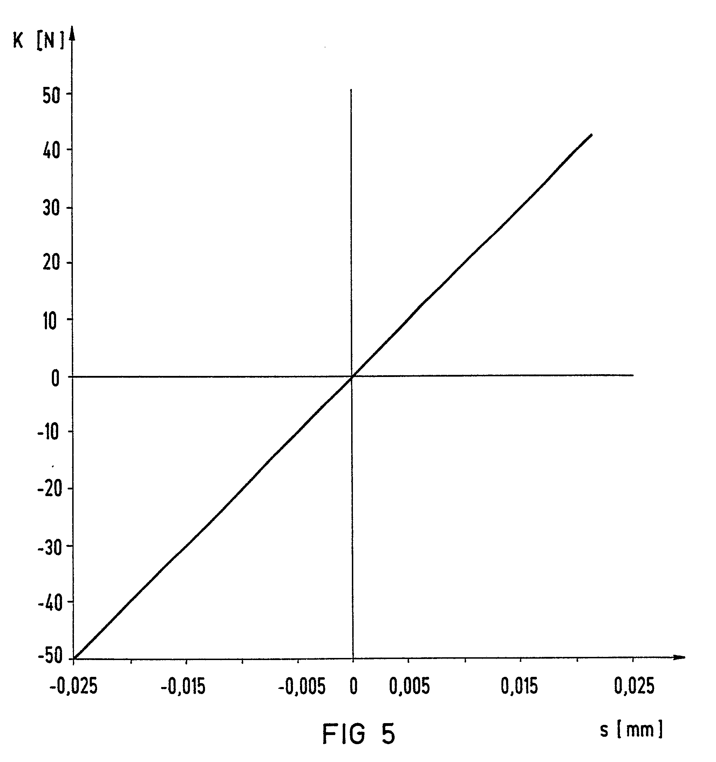

Entsprechend zu den FIG 2 und 3 zeigen die FIG 4 und 5 die Verschiebung der Rohrleitung und die auf eine Halterung einwirkende Kraft nach einer erdbebenähnlichen Einwirkung auf ein Rohrleitungssystem für erfindungsgemäße Halterungen (FIG 4) und für starre Halterungen (FIG 5). Nach einer derartigen nur selten auftretenden äußeren Einwirkung beträgt der Verschiebungsweg des Rohres mit den erfindungsgemäßen Halterungen knapp 5mm und die maximal einwirkende Kraft beträgt 32 kN. Eine starre Halterung kommt bei gleicher äußerer Einwirkung auf eine maximale Kraft von 50 kN bei einem Verschiebungsweg der Rohrleitung von 0,025 mm. In beiden Anwendungsfällen zeigt sich, daß einer tolerierbaren Vergrößerung des Verschiebungsweges bei der erfindungsgemäßen Halterung im Vergleich zu einer starren Halterung eine deutliche Verringerung der maximal auf die Halterung einwirkenden Kraft gegenübersteht. Die Haltbarkeit der erfindungsgemäßen Halterung ist deutlich höher gegenüber bekannten Halterungen, was auf die Verwendung der Schicht 5 aus Gummi nach FIG 1 zurückzuführen ist. Die große Haltbarkeit bedeutet einen geringen Wartungsaufwand und geringe Kosten für die Halterung der Rohre bei großer Zuverlässigkeit.

**Ansprüche**

1. Halterung zum Abstützen eines Rohres auf einem Gebäudeteil und zum Dämpfen von Schwingungen des Rohres, **dadurch gekennzeichnet,** daß die Halterung zwei Gelenkköpfe (2 und 3) aufweist, die durch einen Schaft (1) miteinander verbunden sind, von denen der erste Gelenkkopf (2) mit dem Rohr und der zweite Gelenkkopf (3) mit dem Gebäudeteil in Verbindung zu bringen ist, und daß mindestens einer der Gelenkköpfe (2 und 3) ein Lager aufweist, das ein elastisches Material enthält.

2. Halterung nach Anspruch 1, **dadurch gekennzeichnet,** daß mindestens ein Gelenkkopf (3) eine Buchse (6) aufweist, die einen fest montierten Haltestift umgreifend ausgebildet ist, daß im Gelenkkopf (3) die Buchse (6) und den Haltestift sphärisch umschließend eine Schicht (5) aus elastischem Material angeordnet ist, daß ausschließlich mit der Schicht (5) aus elastischem Material verbunden ein äußerer Mantel (7) des Gelenkkopfes (3) angeordnet ist und daß der äußere Mantel (7) mit dem Schaft (1) in Verbindung steht.

3. Halterung nach Anspruch 2, **dadurch gekennzeichnet,** daß nur der zweite mit dem Gebäudeteil in Verbindung zu bringende Gelenkkopf (3) elastisches Material enthält.

4. Halterung nach den Ansprüchen 1 bis 3, **dadurch gekennzeichnet,** daß das elastische Material Gummi ist.

5. Halterung nach den Ansprüchen 1 und 2, **dadurch gekennzeichnet,** daß der Schaft (1) in Längsrichtung verstellbar ist.

87 P 6054

FIG 1

87 P 6054

FIG 2

87 P 6054

FIG 3

EP 0 299 269 A1

87 P 6054

FIG 4

87 P 6054

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 160 808 (BRADLEY) <br> * Figuren 1-5; Seite 1, Spalte 2, Zeilen 10-55; Seite 2, Spalte 1, Zeilen 1-62 * | 1,4 | F 16 L 3/20 <br> F 16 L 55/02 <br> F 16 F 1/38 |
| A | --- | 3 | |
| A | FR-A-2 479 390 (NISSAN MOTOR CO. LTD) <br> * Figuren 3-5; Seiten 1-10 * <br> --- | 1,4,5 | |
| A | GB-A- 481 974 (RIPPINGILLE) <br> * Figuren 1-5; Seiten 1-3 * <br> --- | 1,2 | |
| A | US-A-4 185 720 (PACIFIC SCIENTIFIC CO.) <br> * Figur 8 * <br> ----- | 2 | |

RECHERCHIERTE SACHGEBIETE (Int. Cl.4)

F 16 L
F 16 F
B 60 K

Der vorliegende Recherchenbericht wurde für alle Patentansprüche erstellt

| Recherchenort | Abschlußdatum der Recherche | Prüfer |
|---|---|---|
| DEN HAAG | 26-10-1988 | NOESEN R.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsatze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)